# EUROPEAN PATENT SPECIFICATION

(11) **EP 4 116 895 B1**
(45) Date of publication and mention of the grant of the patent: **02.07.2025**
(21) Application number: 20923672.8
(22) Date of filing: 03.03.2020
(51) Int. Cl.: G06Q 10/20

(54) **STATE DETECTION SYSTEM**
ZUSTANDSERFASSUNGSSYSTEM
SYSTÈME DE DÉTECTION D'ÉTAT

(43) Date of publication of application: 11.01.2023
(73) Proprietor: MITSUBISHI ELECTRIC CORPORATION, Chiyoda-ku Tokyo 100-8310 (JP)
(72) Inventor: KATO, Shun, Tokyo 100-8310 (JP); YANO, Hirotoshi, Tokyo 100-8310 (JP); NAKAGAWA, Naoki, Tokyo 100-8310 (JP)
(74) Representative: Mewburn Ellis LLP
(86) International application number: PCT/JP2020/008806
(87) International publication number: WO 2021/176542

(56) References cited:
- JP-A- 2002 000 592
- JP-A- 2004 362 325
- JP-A- 2005 121 248
- JP-A- 2009 172 238
- JP-A- 2019 018 185
- US-A1- 2019 004 507

## Description

### Technical Field

The present disclosure relates to a state detection system that detects the state of an apparatus, and provides information indicating the state of the apparatus to, for example, a user or a maintenance agency for the apparatus.

### Background Art

In the past, such an apparatus as described below and a failure diagnosis system including the apparatus have been known (for example, see Patent Literature 1). The apparatus makes a self-diagnosis on the apparatus regarding, for example, whether a failure or an abnormality occurs in the apparatus or not, based on measurement data obtained by various sensors provided at, for example, a cooling apparatus. The apparatus transmits, for example, diagnosis information or abnormal measurement data to, for example, a remote monitoring computer or a communication control terminal, which is included in the failure diagnosis system.

### Citation List

### Patent Literature

Patent Literature1: Japanese Unexamined Patent Application Publication No. 2005-121248

Furthermore, US 2019/004507 A1 discloses an equipment management system and method for monitoring devices that are objects for maintenance management.

### Summary of Invention

### Technical Problem

According to the apparatus of Patent Literature 1, a maintenance agency for the apparatus can recognize the state of the apparatus from the diagnosis information received from the apparatus. However, it may be hard to detect an abnormality since this detection is performed only based on the self-diagnosis made by the apparatus, and it may be also hard to determine whether a failure occurs or not. Thus, there is a possibility that the maintenance agency could not obtain accurate information on the state of the apparatus. Moreover, in the related art, all the apparatus can determine through the self-diagnosis made by the apparatus may be only whether a failure occurs or not. Thus, even when a failure does not occur in the apparatus, there is a risk that it will not be possible to obtain accurate information regarding when a failure will occur in the apparatus.

The present disclosure is applied to solve the above problems, and relates to a state detection system that can more accurately notify a user of the apparatus and a maintenance agency for an apparatus of the state of the apparatus using more accurate information on the state of the apparatus.

### Solution to Problem

The present invention provides a state detection system according to claim 1. Advantageous Effects of Invention

In the state detection system according to an embodiment of the present disclosure, the apparatus optimizes, using data in the second database that is transmitted from the server, the first database that is referred to in order to determine the state of the apparatus. As a result, the apparatus can accurately determine the state of the apparatus and can accurately notify the user of the state of the apparatus using accurate information indicating the state of the apparatus. Moreover, the server determines the state of the apparatus from the signal information received from the apparatus and provide information based on the result of the determination to the maintenance agency of information. As a result, the server can provide the accurate information indicating the state of the apparatus to the maintenance agency.

### Brief Description of Drawings

[Fig. 1] Fig. 1 is a diagram illustrating an example of the configuration of a state detection system according to Embodiment 1.
[Fig. 2] Fig. 2 is a flow chart indicating an example of state detection process performed by an apparatus in Embodiment 1.
[Fig. 3] Fig. 3 is a flow chart indicating an example of state detection process by a server in Embodiment 1.
[Fig. 4] Fig. 4 is a diagram illustrating an example of the result of determination regarding the state of an apparatus in the related art.
[Fig. 5] Fig. 5 is a diagram illustrating an example of the result of determination regarding the state of an apparatus in Embodiment 3.
[Fig. 6] Fig. 6 is a flow chart illustrating an example of a state detection process by the apparatus in Embodiment 3.
[Fig. 7] Fig. 7 is a flow chart indicating an example of a state detection process by a server in Embodiment 3.
[Fig. 8] Fig. 8 is a schematic diagram for explanation of a determination process by a determination module 104 in Embodiment 5.
[Fig. 9] Fig. 9 is a diagram indicating an example of information that is recorded in the case where an abnormal event occurs in an internal device.
[Fig. 10] Fig. 10 is a flow chart indicating an example of a number-of-abnormalities counting process by a determination module in Embodiment 5. Description of Embodiments

Embodiments will be descried with reference to the drawings. It should be noted that in each of figures that will be referred to, the relationships in size between components may be different from actual ones.

### Embodiment 1

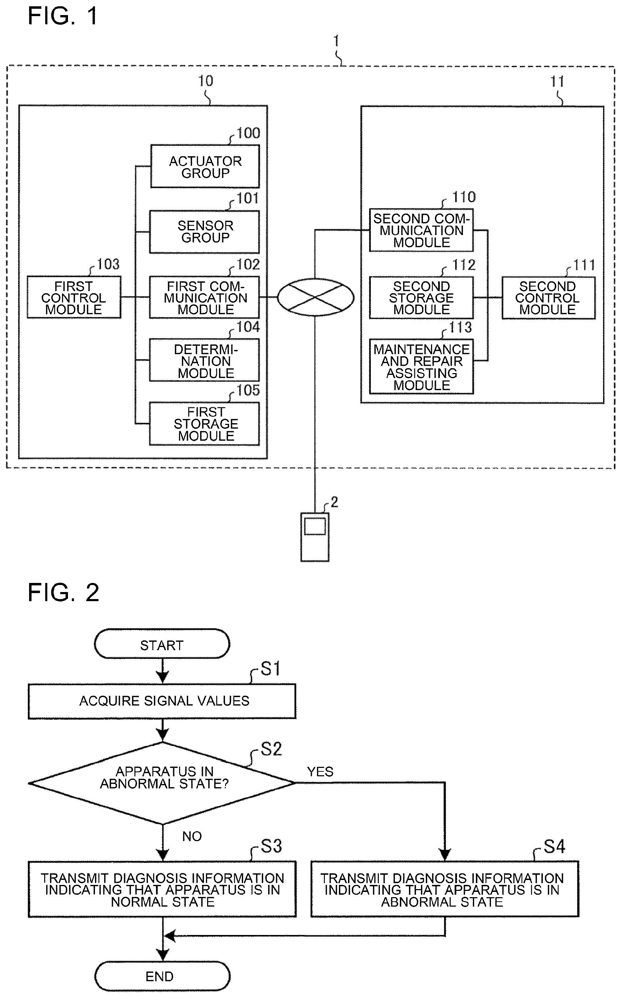

Fig. 1 is a diagram illustrating an example of the configuration of a state detection system according to Embodiment 1. A state detection system 1 includes one or more apparatuses 10 and a server 11. Each of the apparatuses 10 is, for example, an air-conditioning apparatus. The apparatus 10 includes an actuator group 100, a sensor group 101, a first communication module 102, a first control module 103, a determination module 104, and a first storage module 105. The actuator group 100 includes one or more actuators. Each of the actuators converts electric energy into physical energy, and is, for example, a pump, a compressor, or a motor. The sensor group 101 includes one or more sensors. Each of the sensors is, for example, a thermometer, a hygrometer, or an infrared sensor. It should be noted that in the following, the actuator or the sensor may also be described as an internal device.

The first communication module 102 connects to a global network such as the Internet, which is a communication network using public lines, and enables the apparatus 10 and the server 11 to communicate with each other and also enables the apparatus 10 and a terminal device 2 of a user to communicate with each other. It should be noted that the user means the user of the apparatus 10. The first communication module 102 may be, for example, a gateway, and may perform protocol conversion and be used in transmission and reception of packets between an indoor communication network and an outdoor communication network including public lines. Alternatively, the first communication module 102 may also be, for example, a modem, and may perform modulation and demodulation between a transmission signal compliant with a transmission line of public lines and a signal compliant with a home communication line or may convert a signal for a transmission medium such as an electric wire into a signal for a transmission medium that is different in type from the above former transmission medium, such as an optical communication line or a wireless communication line. It should be noted that the first communication module 102 may be a communication device serving as a network node that executes the above processes.

The first control module 103 controls the actuator group 100, the sensor group 101, the first communication module 102, etc. It should be noted that the first control module 103 outputs a control signal to the actuator group 100 and the sensor group 101 to control electric signals that correspond to, for example, voltages or currents in the actuator group 100 and the sensor group 101. The first control module 103 also acquires electric signals from the actuator group 100 and the sensor group 101. The first control module 103 may acquire the control signal output to the actuator group 100 and the sensor group 101. It should be noted that in the following, the electric signals and the control signal that are acquired by the first control module 103 may also be simply described as signals; and that the value of a signal may also be described as a signal value, and information indicating a signal may also be described as signal information.

The determination module 104 determines the state of the apparatus 10 from signal information. It should be noted that the states of the apparatus 10 include a state in which the apparatus 10 is operating normally and a state in which the apparatus 10 has an abnormality. It is assumed that the state in which the apparatus 10 is operating normally is a state in which the apparatus 10 is operating without any problem; and the state in which the apparatus 10 has an abnormality is a state in which a failure does not occur in the apparatus 10, but a sign of a failure is seen in the apparatus 10, or a state in which a failure occurs in the apparatus 10. It should be noted that in the following, the state in which the apparatus 10 is operating normally may also be described as a state in which the apparatus 10 is normal or a normal state; and that the state in which the apparatus 10 has an abnormality may also be described as an abnormal state.

In the following, a process by the determination module 104 to determine the state of the apparatus 10 is also described as a diagnosis process. In the diagnosis process, the determination module 10 refers to a first database stored in the first storage module 105. The first database includes information regarding a failure of the apparatus 10 and information regarding the state of the apparatus 10, and is an aggregate of information necessary for determination of the state of the apparatus 10. The determination module 104 produces and updates the first database as needed. It should be noted that as described later, the first database is produced and updated using data in a second database, which is received from the server 11.

The first communication module 102 transmits to the server 11, diagnosis information indicating the result of determination by the determination module 104, signal information, and data in the first database in response to a command from the first control module 103. Furthermore, the first communication module 102 transmits maintenance information including the diagnosis information to the terminal device 2 of the user in response to a command from the first control module 103. The maintenance information indicates whether or not maintenance is necessary and the urgency of maintenance, and may also indicate, for example, the time required to perform maintenance.

The server 11 is an apparatus that assists work of a maintenance agency. The server 11 includes a second communication module 110, a second control module 111, a second storage module 112, and a maintenance and repair assisting module 113. The second communication module 110 connects to a global network such as the Internet and enables the server 11 and the apparatus 10 to communicate with each other. The second communication module 110, as well as the first communication module 102, may be, for example, a gateway or a modem. The second communication module 110 may perform protocol conversion between different communication networks to enable the different communication networks to perform packet communication between the different communication networks, or may modulate and demodulate signals between the different communication lines, or may convert signals between transmission media that are of different types. It should be noted that the second communication module 110 may execute the above processes.

The second control module 111 controls, for example, the second communication module 110 and the maintenance and repair assisting module 113. When the second communication module 110 receives from the apparatus 10 signal information and diagnosis information, and for example data in the first database, the second control module 111 causes the second storage module 112 to store these information. The second control module 111 also causes the second storage module 112 to store information regarding past records of maintenance and repair that is input by the maintenance agency. It should be noted that in the following, the information regarding past records of maintenance and repair that is input by the maintenance agency may also be described as maintenance-repair past record information. The second database is stored in the second storage module 112 and includes the diagnosis information, the signal information, and for example the data in the first database that are acquired from the apparatus 10, together with the maintenance-repair past record information. The second control module 111 produces and updates, as appropriate, the second database, using the signal information from the apparatus 10, the maintenance-repair past record information, etc. It should be noted that the first database in the second database may be changed using, for example, not only the information from the apparatus 10 but also information input to the server 11.

The second control module 111 refers to the second database and determines the state of the apparatus 10 from the signal information.

The maintenance and repair assisting module 113 acquires maintenance-repair past record information from the maintenance agency. Moreover, the maintenance and repair assisting module 113 refers to the second database and determines as work to be done, details of maintenance or repair work for the apparatus 10 from the result of the determination by the second control module 111. The maintenance and repair assisting module 113 then estimates the number of working days required for the maintenance or repair. The maintenance and repair assisting module 113 notifies the maintenance agency of, for example, the details of the work, the number of working days, and the result of the determination by the second control module 111.

It should be noted that the second control module 111 of Embodiment 1 transmits data in the second database to the apparatus 10. Using the data in the second database, which is transmitted from the server 11, the apparatus 10 updates the first database stored in the first storage module 105 or produces first database in the case where the first database is not present in the first storage module 105.

The second control module 111 may perform a control to cause the second communication module 110 to transmit maintenance information indicating the state of the apparatus 10 to the terminal device 2 of the user. In this case, the maintenance information includes not the above diagnosis information but information indicating the result of the determination by the second control module 111.

Each of hardware configurations of the apparatus 10 and the server 11 will be described. The functions of the apparatus 10 can be fulfilled by a structure including, for example, a processor such as a central processing unit (CPU) or a micro processing unit (MPU), a memory such as a read only memory (ROM) or a random access memory (RAM), a storage device such as a hard disk drive (HDD), a communication interface circuit, etc., and a control circuit such as a driver circuit. Regarding the functions of the first control module 103 and the determination module 104, the processor reads out various programs stored in the memory and executes the programs, thereby fulfilling the functions of the first control module 103 and the determination module 104. It should be noted that regarding the function of the first control module 103 with which the actuator group 100 and the sensor group 101 are controlled, the processor reads out a control program stored in the memory and performs a process according to the control program on the actuator group 100 and the sensor group 101 via the control circuit, thereby fulfilling the function of the first control module 103. The functions of the first communication module 102 can be fulfilled by the above communication interface circuit. The functions of the first storage module 105 can be fulfilled by the storage device or the memory. It should be noted that all or some of the functions of the apparatus 10 may be fulfilled by a dedicated hardware device.

The functions of the server 11 can be fulfilled by a structure including, for example, a processor such as a CPU or an MPU, a memory such as a ROM or a RAM, a communication interface circuit, a storage device such as an HDD, a display device including a liquid crystal display, a cathode ray tube (CRT), etc., and an input device such as a keyboard, a mouse, or a touch screen. The function of the maintenance and repair assisting module 113 with which maintenance-repair past record information from the maintenance agency is received can be fulfilled by the input device. Furthermore, the function of the maintenance and repair assisting module 113 with which, for example, the maintenance agency is notified of the details of work and the number of working days can be fulfilled by the display device. However, these functions of the maintenance and repair assisting module 113 may be fulfilled by the communication interface circuit. In this case, the maintenance-repair past record information may be transmitted from a terminal device of the maintenance agency to the server 11, and the details of work, the number of working days, etc., may be transmitted from the server 11 to the terminal device. The functions of the second control module 111 and the function of the maintenance and repair assisting module 113 with which the details of work and the number of working days are determined and estimated can be fulfilled by operations of the processor that are operations of reading out various programs stored in the memory and executing the programs. The functions of the second communication module 110 can be fulfilled using the communication interface circuit. The functions of the second storage module 112 can be fulfilled by the memory or the storage device. All or some of the functions of the server 11 may be fulfilled by a dedicated hardware device.

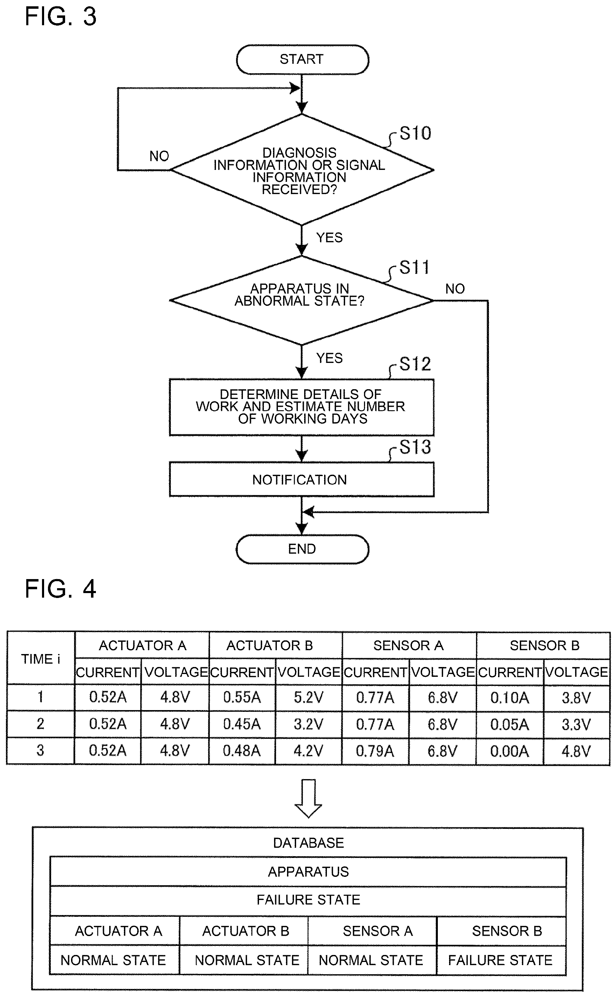

A state detection process in the state detection system 1 according to Embodiment 1 will be described. Fig. 2 is a flow chart indicating an example of a state detection process by the apparatus in Embodiment 1. Fig. 3 is a flow chart indicating an example of a state detection process by the server in Embodiment 1. In step S1 as indicated in Fig. 2, the first control module 103 acquires signal values while controlling the actuator group 100 and the sensor group 101. In step S2, the determination module 104 refers to the first database and determines whether the apparatus 10 is in the abnormal state or not, from the signal values.

In the case where the apparatus 10 is not in the abnormal state (NO in step S2), in step S3, the first control module 103 perform a control to cause the first communication module 102 to transmit to the server 11, diagnosis information indicating that the apparatus 10 is in the normal state. In step S3, the first control module 103 performs a control to cause the first communication module 102 to transmit the signal information together with the diagnosis information to the server 11 and optionally may perform a control to cause the first communication module 102 to transmit data in the first database to the server 11. Furthermore, the first control module 103 performs a control to cause the first communication module 102 to transmit maintenance information including the diagnosis information to the terminal device 2 of the user. The first communication module 102 transmits the diagnosis information to the server 11 and the maintenance information to the terminal device 2 in response to a command from the first control module 103, and thereafter the apparatus 10 ends the state detection process.

In step S2, in the case where the determination module 104 determines that the apparatus 10 is in the abnormal state (YES in step S2), in step S4, the first control module 103 perform a control to cause the first communication module 102 to transmit diagnosis information indicating that the apparatus 10 is in the abnormal state to the server 11. The first control module 103 performs a control to cause the first communication module 102 to transmit the signal information together with the diagnosis information to the server 11 and optionally may perform a control to cause the first communication module 102 to transmit data in the first database to the server 11. Furthermore, the first control module 103 perform a control to cause the first communication module 102 to transmit maintenance information including the diagnosis information to the terminal device 2 of the user. It should be noted that in the case where the apparatus 10 is in the normal state, the process of transmitting such maintenance information to the terminal device 2 may be omitted in order to reduce, for example, a communication volume.

It should be noted that in step S2, in the case where the determination module 104 determines that an abnormality occurs in the apparatus 10, the determination module 104 may estimate the level of the abnormality of the apparatus 10 before performing the process in step S4. For example, the determination module 104 may determine an internal device in the actuator group 100 and the sensor group 101 as an internal device which has a failure or an internal device which does not have a failure but is not operating normally, on the basis of the signal values, and may analyze the level of an abnormality of the identified internal device and the details of the abnormality. The determination module 104 may then anticipate an event that may be caused by the failure which the internal device has. In step S4, the first control module 103 may perform a control to cause the first communication module 102 to transmit to the server 11, for example, data indicating the internal device identified by the determination module 104, the level of the abnormality of the internal device, and the details of the abnormality together with the diagnosis information.

In step S4, the first communication module 102 transmits the diagnosis information to the server 11 and the maintenance information to the terminal device 2, in response to a command from the first control module 103, and then the apparatus 10 ends the state detection process.

In step S10 as indicated in Fig. 3, the second control module 111 of the server 11 determines whether or not the second communication module 110 receives the diagnosis information and the signal information from the apparatus 10. In the case where the second communication module 110 does not receive the diagnosis information and the signal information from the apparatus 10 (NO in step S10), the server 11 holds the processing at the process in step S10. In the case where the second communication module 110 receives the diagnosis information and the signal information from the apparatus 10 (YES in step S10), in step S11, the second control module 111 determines whether or not the apparatus 10 is in the abnormal state, from the signal information. In step S10, the information received by the second communication module 110 is the signal information, and in step S11, the second control module 111 refers to the second database and determines the state of the apparatus 10 from the signal information.

In step S11, in the case where it is determined that the apparatus 10 is not in the abnormal state (NO in step S11), the server 11 ends the processing. In step S11, in the case where it is determined that a failure occurs in the apparatus 10 or an abnormality occurs in the apparatus 10 (YES in step S11), in step S12, the maintenance and repair assisting module 113 determines as work to be done, the details of necessary maintenance or repair work from, for example, the state of the apparatus 10 and the level of the failure. Furthermore, the maintenance and repair assisting module 113 estimates the number of working days necessary for maintenance or repair. In step S13, the maintenance and repair assisting module 113 notifies the maintenance agency of the details of work and the number of working days that are determined and estimated in step S12 and a determination result that is obtained from the second control module 111 in step S11. After the process in step S13 is executed, the server 11 ends the state detection process.

It should be noted that that in step S10, the second communication module 110 receives the diagnosis information and the signal information (YES in step S10), in step S11, the second control module 111 refers to the second database and determines the state of the apparatus 10 based on the signal information. The second control module 111 then compares the determination result and the diagnosis information with each other. According to the result of comparison, in the case where the determination result does not coincide with the diagnosis information, the second control module 111 transmits data in the second database to the apparatus 10. The apparatus 10 then updates the first database on the basis of the data transmitted. In addition, the first database may also be updated regularly or at a specific timing.

It will be described what advantages are obtained by the state detection system 1 according to Embodiment 1. The state detection system 1 includes the one or more apparatuses 10 and the server 11, which is used in maintenance and repair of one or more apparatuses 10. Each of the apparatuses 10 includes the one or more internal devices, the first control module 103, the first storage module 105, the determination module 104, and the first communication module 102. The one or more internal devices are at least one of the actuator group 100, which includes one or more actuators, and the sensor group 101, which includes one or more sensors. The first control module 103 controls the one or more internal devices, and acquires a signal for controlling each of the one or more internal devices and signal information regarding any of signals from the one or more internal devices. The first storage module 105 stores the first database, which is rewritable and used in in determination of the state of the apparatus 10. The determination module 104 refers to the first database and determines the state of the apparatus 10 based on the signal information. The first communication module 102 communicates with the terminal device 2 of the user of the apparatus 10 and the server 11. The first control module 103 performs a control to cause the first communication module 102 to transmit the maintenance information including the result of the determination by the determination module 104 to the terminal device 2 of the user, and also performs a control to cause the first communication module 102 to transmit the result of the determination and the signal information to the server 11. The server 11 includes the second communication module 110, the second storage module 112, the second control module 111, and the maintenance and repair assisting module 113. The second communication module 110 receives the result of the determination and the signal information from the apparatus 10. The second storage module 112 stores the second database for use in determination of the state of the apparatus 10. The second control module 111 determines the state of the apparatus based on the signal information received by the second communication module 110. In the case where the second control module 111 determines that the apparatus 10 is in the abnormal state for which maintenance or repair of the maintenance and repair assisting module 113 needs to be performed, and provides information based on the result of the determination by the second control module 111 to the maintenance agency of the apparatus 10. The second control module 111 performs a control to cause the second communication module 110 to transmit data in the second database to the apparatus 10. The determination module 104 updates the first database using the data in the second database, which is received from the server 11.

According to Embodiment 1, the apparatus 10 optimizes the first database, which is referred to in order to determine the state of the apparatus 10, using the data in the second database, which is received from the server 11. The apparatus 10 can thus accurately determine the state of the apparatus 10. The apparatus 10 can notify the user of the accurate determination result via the first communication module 102. As a result, the user of the apparatus 10 can accurately and promptly know state of the apparatus 10 and can thus determine whether maintenance is required or not. The server 11 determines the state of the apparatus 10 based on the signal information received from the apparatus 10. In the case where the server 11 determines that the apparatus 10 is in the abnormal state, the server 11 provides the information based on the determination result to the maintenance agency for the apparatus 10. As a result, the maintenance agency of the apparatus 10 can accurately and promptly know the state of the apparatus 10 and can thus appropriately determine the details of maintenance.

Since not the server 11 but the apparatus 10 transmits maintenance information to the terminal device 2 of the user, the communication volume in the server 11 decreases, and a communication processing load to the server 11 decreases.

The maintenance and repair assisting module 113 of Embodiment 1 determines and estimates, on the basis of the result of the determination by the second control module 111, the details of work for maintenance or repair of the apparatus 10 and the number of working days necessary for the maintenance or the repair. The maintenance and repair assisting module 113 then notifies the maintenance agency of the details of the work, the number of working days, and the result of the determination by the second control module 111. Since the maintenance and repair assisting module 113 determines the details of the work and estimates the number of working days on the basis of the accurate result regarding the state of the apparatus 10 and determined by the second control module 111, the maintenance agency can obtain accurate information regarding the maintenance and repair of the apparatus 10. Thus, the maintenance agency can prevent occurrence of a sudden failure in the apparatus, and can do an appropriate work. Furthermore, the maintenance agency can do their work in a distributed processing manner, and can thus promptly procure necessary components. Accordingly, the maintenance work is done more efficiently.

The second database of Embodiment 1 includes the maintenance-repair past record information, which indicates past records of maintenance or repair by the maintenance agency. The maintenance and repair assisting module 113 refers to the second database, and determines the details of work and estimates the number of working days. In such a manner, the past records of the maintenance agency are fed back to the determination of the details of work and the estimation of the number of working days. Accordingly, the maintenance and repair assisting module 113 can determine details of an appropriate and efficient work and can estimate the appropriate number of working days.

In the case where the determination module 104 determines that the apparatus 10 is in the abnormal state, for which maintenance or repair is necessary, the first control module 103 of Embodiment 1 performs a control to cause the first communication module 102 to transmit maintenance information to the terminal device 2 of the user. As a result, in the case where the apparatus 10 is in the normal state, maintenance information is not transmitted or received between the apparatus 10 and the terminal device 2, and the communication volume can thus be reduced.

### Embodiment 2

The apparatus 10 of Embodiment 1 as described above refers to the first database stored in the first storage module 105 and performs diagnosis processing. An apparatus 10 of Embodiment 2 improves the degree of precision of the first database to improve the accuracy with which a failure or an abnormality is detected in the diagnosis process. Then, a state detection system 1 according to Embodiment 2 will be described. It should be noted that components that are the same as or similar to those in Embodiment 1 and have the same functions as or similar functions to those of Embodiment 1 will be denoted by the same reference numerals as in Embodiment 1. Furthermore, descriptions concerning components, functions, and operations that are the same as or similar to those of Embodiment 1 as described above will be omitted unless otherwise specified.

A server 11 of Embodiment 2 transmits, to the apparatus 10, apparatus information including information indicating at least one of the model type, the manufacture year, environment conditions, the operation mode, etc. of the apparatus 10. It should be noted that information indicating the environment conditions indicates environment conditions at the installation position of the apparatus 10, such as temperature and humidity. Information. The information indicating the operation mode indicates the operation mode of the apparatus 10, and when the apparatus 10 is, for example, a heating apparatus, the information indicates a heating operation and may further indicate the kind of a control such as inverter control.

The apparatus information is stored in advance in the second storage module 112. It should be noted that the apparatus information may be included in the second database. The apparatus information may be transmitted each time update is performed, may be transmitted regularly, or may be transmitted when the server 11 receives a request from the apparatus 10. The second communication module 110 transmits the apparatus information to the apparatus 10 in response to a command from the second control module 111. When receiving the apparatus information, the first control module 103 of the apparatus 10 causes the first storage module 105 to store the apparatus information.

In this case, for example, when the first database in the first storage module 105 is updated using the data received from the server 11, data on another apparatus 10 may be stored in the first database. The apparatus 10 of Embodiment 2 can extract information necessary for the diagnosis process from the first database by referring to the apparatus information. It should be noted that the necessary information is information regarding the apparatus 10, and for example, information regarding an apparatus 10 whose model type is the same as or similar to that of the former apparatus 10 and whose operation mode is the same as or similar to that of the former apparatus 10. Furthermore, the information regarding the apparatus 10 may also be information regarding an apparatus 10 that is the same as or similar to that regarding the former apparatus 10 in environment conditions. As a result, when the diagnosis process is performed, the apparatus 10 eliminates data on other apparatuses 10 that are dissimilar to the apparatus 10 in the first database that is referred to. Therefore, the apparatus 10 can promptly and efficiently detect the state of the apparatus 10 using only information regarding the apparatus 10.

It should be noted that the first control module 103 or the determination module 104 may update the first database using the apparatus information received from the server 11, and maintain only information necessary for determining the state of the apparatus 10 by, for example, deleting information regarding other apparatuses 10.

It should be noted that the second control module 111 of Embodiment 2 may perform a control to cause the second communication module 110 to transmit maintenance information including the apparatus information to the terminal device 2. In the case where the maintenance information includes information indicating the model type of the apparatus 10, and the user receives the maintenance information, the user can notify the maintenance agency of the model type and can smoothly make a request for maintenance. Furthermore, in the case where the maintenance information includes the manufacture year, and the maintenance agency receives from the user, a request for maintenance, the maintenance agency can determine, for example, the degree of age deterioration or wear of the apparatus 10 from the manufacture year, and may thus smoothly perform maintenance work.

It will be described what advantages are obtained by the state detection system 1 according to Embodiment 2. The second storage module 112 of Embodiment 2 stores the apparatus information including the information indicating at least one of the model type, the manufacture year, the environment conditions, and the operation mode of the apparatus 10. The second control module 111 performs a control to cause the second communication module 110 to transmit the apparatus information to the apparatus 10. In the case where the determination module 104 receives the apparatus information from the server 11, the determination module 104 determines the state of the apparatus 10 based on the apparatus information. As a result, the apparatus 10 can extract only information regarding the apparatus 10 even when the first storage module 105 includes information regarding another apparatus 10, and can promptly and efficiently detect the state of the apparatus 10 using the extracted information.

The first control module 103 of Embodiment 2 performs a control to cause the first communication module 102 to transmit the maintenance information including the apparatus information to the terminal device 2 of the user. As a result, when making a request for maintenance, the user provides the apparatus information to the maintenance agency, whereby the maintenance agency can promptly and efficiently extract information regarding the apparatus 10, and thus promptly make a determination.

### Embodiment 3

Each of the apparatuses 10 according to Embodiments 1 and 2 determines, from signal information, whether the apparatus 10 is in the normal state or a failure or an abnormality occurs in the apparatus 10. An apparatus 10 according to Embodiment 3 more specifically determines the state of the apparatus 10, that is, determines which state level the state of the apparatus 10 is at. Furthermore, the apparatus 10 provides, to the user, criteria for determining, for example, the urgency of a need for maintenance and time at which maintenance will be required. In addition, the server 11 can notify the maintenance agency of more specific details of work and the number of working days on the basis of diagnosis information acquired from the apparatus 10. A state detection system 1 according to Embodiment 3 will be described. It should be noted that components that are the same as or similar to those in Embodiment 1 and/or Embodiment 2 and have the same functions as or similar functions to those of Embodiment 1 and/or Embodiment 2 will be denoted by the same reference signs. In addition, descriptions of components, functions, and operations that are the same as or similar to those in Embodiment 1 and/or Embodiment 2 will be omitted unless otherwise specified.

In Embodiment 3, it is assumed that the state of the apparatus 10 can be changed into a plurality of states that are classified into a plurality of state levels. To be more specific, in Embodiment 3, it is assumed that the state of the apparatus 10 can be changed into a plurality of states that are classified into five state levels. It should be noted that although it is described above that the number of state levels is five, it is merely an example, and the number of state levels may be three, four, or six or more. In Embodiment 3, it is assumed that state level 0 represents a good state; state level 1 represents a normal state; state level 2 represents a bad state; state level 3 represents a minor failure state; and state level 4 represents a serious failure state. In this case, the good state means a state in which, for example, the apparatus 10 is an apparatus in mint condition, and the bad state means a state in which a failure does not occur in the apparatus 10, but a sign of a failure is seen in the apparatus 10. The minor failure state means a state in which the use of some of the functions of the apparatus 10 is restricted, but the apparatus 10 can still operate. The serious failure state means a state in which a critical problem occurs in the apparatus 10, and for example, a state in which the apparatus 10 malfunctions, or the apparatus 10 does not perform a desired operation for the user, or a state in which the apparatus 10 does not operate.

Regarding the state of each of the internal devices, a plurality of states may be present and classified into a plurality of state levels, as well as the state of the apparatus 10. For example, the states of the internal devices may be a good state, a normal state, a bad state, a minor failure state, and a serious failure state.

The first database of the first storage module 105 includes, for example, information such as thresholds, which indicates ranges of signal values corresponding to the states of the internal devices. For example, the first database includes an upper limit value and a lower limit value of signal values in the case where the internal devices are in the normal state. Furthermore, the first database includes at least one of an upper limit value and a lower limit value of signal values in the case where the internal devices are in the good state. The determination module 104 determines which state level the state of the apparatus 10 is classified into, from signal values of the internal devices that are acquired by the first control module 103. In this case, each of the signal values may be acquired over a certain period or may be acquired at a specific time.

The determination module 104 may determine the state of the apparatus 10 on the basis of not only the states of the internal devices which are indicated by the signal values but also information regarding how many internal devices in the actuator group 100 and the sensor group 101 are in the normal state or the failure state. Furthermore, the determination module 104 may determine which state level the state of each internal device is at, from the signal value of the internal device and may determine the state of the apparatus 10 on the basis of the states of the internal devices.

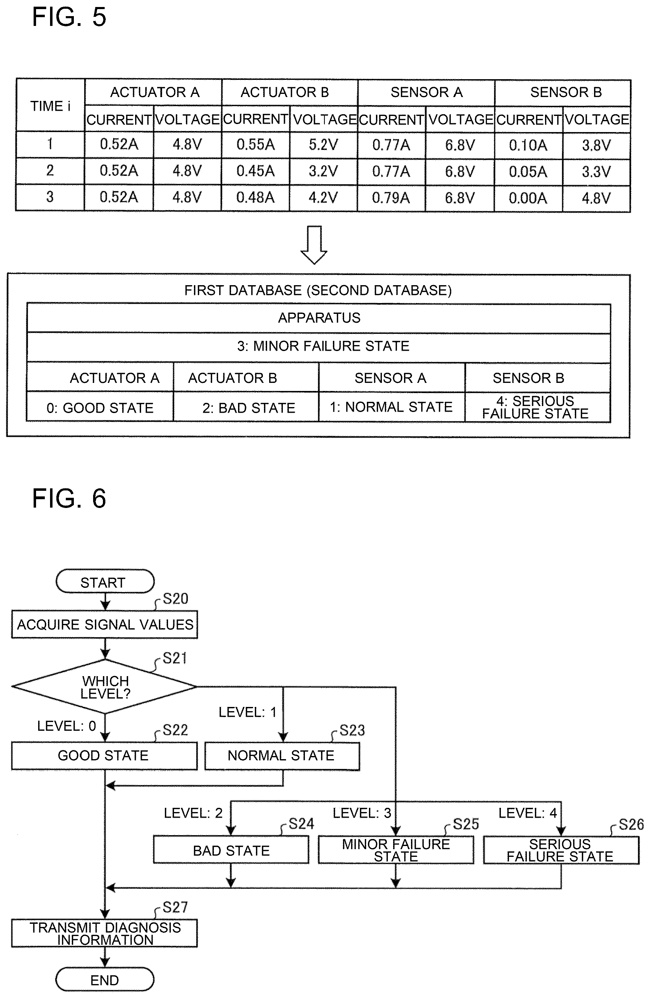

Next, a specific example of the result of determination by the determination module 104 will be described in comparison with an existing system. Fig. 4 is a diagram indicating an example of the result of determination regarding the state of an apparatus in the related art. Fig. 5 is a diagram indicating an example of the result of determination regarding the state of the apparatus in Embodiment 3. Figs. 4 and 5 indicate current values and voltage values of an actuator A, an actuator B, a sensor A, and a sensor B at time i. It should be noted that i is an index assigned to time, and i represents natural numbers from 1 to 3 in Figs. 4 and 5. For example, the current value of the actuator A at time 1 is 0.52A.

As illustrated in Fig. 4, in the related art, it is determined whether each of the actuator A, the actuator B, the sensor A, and the sensor B is in the normal state or the failure state, from associated ones of the acquired current values and voltage values. Referring to Fig. 4, it is determined that the state of the actuator A is the normal state; the state of the actuator B is the normal state; the state of the sensor A is the normal state; and the state of the sensor B is the failure state.

In the related art, a database that is to be referred to in the determination of the state of the apparatus, the state of the apparatus is defined on the basis of whether each of the internal devices is in the normal state or the failure state. In the database in the related art, as the state of the apparatus, only the normal state or the failure state is defined. As indicated in Fig. 4, the actuator A, the actuator B, the sensor A, and the sensor B are in the normal state, the normal state, the normal state, and the failure state, respectively. Thus, it is determined that the apparatus is in the failure state on the basis of the database.

As illustrated in Fig. 5, in Embodiment 3, it is determined that each of the actuator A, the actuator B, the sensor A, and the sensor B is at any one of the state levels corresponding to levels 0 to 4 from the acquired current values and voltage values. Referring to Fig. 5, it is determined that the actuator A is in the good state corresponding to level 0; the actuator B is in the bad state corresponding to level 2; the sensor A is in the normal state corresponding to level 1; and the sensor B is in the serious failure state corresponding to level 4. In the first database of Embodiment 3, depending on the state levels of the states of the internal devices, the state of the apparatus 10 is defined in level. In the first database, as the state of the apparatus 10, the states at the levels from level 0 to level 4 as described above are defined. In the first database as indicated in Fig. 5, the minor failure state corresponding to level 3 is defined as the state of the apparatus 10 in the case where the actuator A is in the good state, the actuator B is in the bad state, the sensor A is in the normal state, and the sensor B is in the serious failure state. As indicated in Fig. 5, in Embodiment 3, the state of the apparatus 10 is more specifically determined than in the related art.

The first control module 103 performs a control to cause the first communication module 102 to transmit maintenance information indicating the state of the apparatus 10 that is determined by the determination module 104 to the terminal device 2 of the user. It should be noted that the maintenance information indicates the state of the apparatus 10, whose state level is any one of the five state levels as described above. The maintenance information enables the user to more flexibly deal with the state of the apparatus 10. For example, the user can easily determine whether or not maintenance needs to be performed, from the state of the apparatus 10 that is indicated by the maintenance information, and can make a request to the maintenance agency if necessary. Furthermore, the user can estimate, in advance, time at which maintenance will become necessary. Thus, the user can request maintenance at the time at the maintenance will become necessary, while maintaining necessary functions of the apparatus 10, and can prevent occurrence of an unforeseen problem by making a maintenance request at an appropriate timing. It is therefore possible to minimize a time period for which the apparatus 10 does not perform a desired operation for the user.

The first control module 103 perform a control to cause the first communication module 102 to transmit, to the server 11, diagnosis information indicating at least one of the level of the state of the apparatus 10 that is determined by the determination module 104 and the state of the apparatus 10 that corresponds to the level. It is assumed that the second storage module 112 of the server 11 of Embodiment 3 stores information indicating each of the levels and information indicating the state of the apparatus 10 that corresponds to the level in association with each other. The second control module 111 of the server 11 determines the state of the apparatus 10 from the signal information.

It should be noted that the second control module 111 determines the state of the apparatus 10 based on the signal information, and the second database, as well as the first database as described above, includes, regarding each of the states of the apparatus 10, at least one of an upper limit value and a lower limit value of signal values of each of the internal devices. The second control module 111 refers to the second database and performs a determination process that is similar to the determination process by the determination module 104. In this case, it is assumed that the first database as indicated in Fig. 5 should read the second database.

The maintenance and repair assisting module 113 determines as work to be done, the details of maintenance or repair work or estimates the number of working days from the state of the apparatus 10 that is determined by the second control module 111, and notifies the maintenance agency of the details of maintenance or repair work or the number of working days.

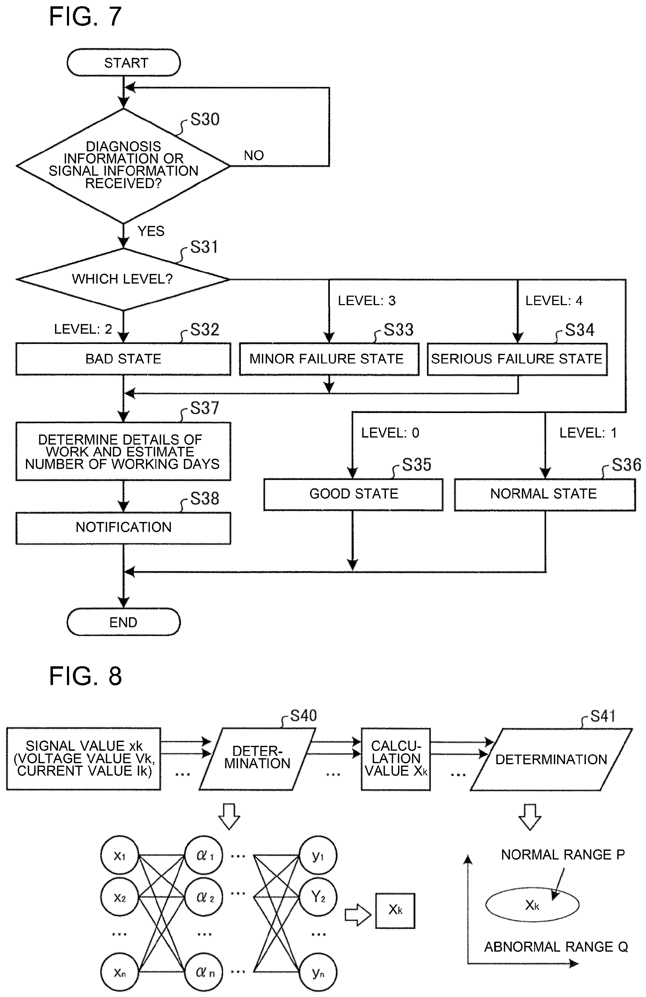

The flow of processing by the state detection system according to Embodiment 3 will be described with reference to Figs. 6 and 7. Fig. 6 is a flow chart indicating an example of a state detection process by the apparatus in Embodiment 3. Fig. 7 is a flow chart indicating an example of a state detection process by the server in Embodiment 3. In step S20 in Fig. 6, the first control module 103 acquires signal values while controlling the actuator group 100 and the sensor group 101. In step S21, the determination module 104 refers to the first database and determines which state level the state of the apparatus 10 is at, on the basis of the signal values. In this case, it is determined which of the five state levels the state of each internal device is at, based on, for example, a range within which the signal value of the internal device falls, and is also determined which state level the state of the apparatus 10 is at, based on the states of the internal devices. Through the determination process in step S21, the determination module 104 makes a determination in any one of steps S22 to S26. In step S22, the determination module 22 determines that the apparatus 10 is in the good state that corresponds to state level 0. In step S23, the determination module 22 determines that the apparatus 10 is in the normal state corresponding to state level 1. In step S24, the determination module 22 determines that the apparatus 10 is in the bad state corresponding to state level 2. In step S25, the determination module 22 determines that the apparatus 10 is in the minor failure state corresponding to state level 3. In step S26, the determination module 22 determines that the apparatus 10 is in the serious failure state corresponding to state level 4.

After the processes of steps S22 to S26, in step S27, the first control module 103 performs a control to cause the first communication module 102 to transmit diagnosis information including the result of determination by the determination module 104 to the server 11. The first control module 103 performs a control to cause the first communication module 102 to transmit signal information together with the diagnosis information to the server 11. It should be noted that in step S27, the first control module 103 performs a control to cause the first communication module 102 to transmit maintenance information including the diagnosis information to the terminal device 2 of the user. It should be noted that only in the case where the state of the apparatus 10 is at any one of state levels 2 to 4, the first control module 103 may perform a control to cause the first communication module 102 to transmit the maintenance information to the terminal device 2. After the process of step S27, the apparatus 10 ends the state detection process.

In step S30 as indicated in Fig. 7, the second control module 111 of the server 11 determines whether or not the second communication module 110 receives the diagnosis information and the signal information from the apparatus 10. In the case where the second communication module 110 does not receive the diagnosis information and the signal information from the apparatus 10 (NO in step S30), the server 11 stops proceeding not to cause the processing to proceed from step S30. In the case where the second communication module 110 receives the diagnosis information and the signal information from the apparatus 10 (YES in step S30), in step S31, the second control module 111 determines which state level the state of the apparatus 10 is at or not, based on the signal information. It should be noted that in step S30, in the case where the information received by the second communication module 110 is the diagnosis information, in step S31, the second control module 111 determines which state level the state of the apparatus 10 is at, based on the diagnosis information. In step 30, the information received by the second communication module 110 is the signal information, in step S31, the second control module 111 refers to the second database and determines from the signal information which state level the state of the apparatus 10 is at.

Through the determination process in step S31, the second control module 111 makes a determination in any one of steps S32 to S36. In step S32, the second control module 111 determines that the apparatus 10 is in the bad state corresponding to state level 2. In step S33, the second control module 111 determines that the apparatus 10 is in the minor failure state corresponding to level 3. In step S34, the second control module 111 determines that the apparatus 10 is in the serious failure state corresponding to state level 4. In step S35, the second control module 111 determines that the apparatus 10 is in the good state corresponding to state level 0. In step S36, the second control module 111 determines that the apparatus 10 is in the normal state corresponding to state level 1.

After step S32, in step S37, the maintenance and repair assisting module 113 determines as work to be done, the details of maintenance work for the apparatus 10. Furthermore, the maintenance and repair assisting module 113 estimates the number of working days necessary for the maintenance work. After each of the processes of steps S33 and S34, in step S37, the maintenance and repair assisting module 113 estimates as work to be done, the details of repair work for the apparatus 10. Furthermore, the maintenance and repair assisting module 113 estimates the number of working days necessary for the repair work.

After step S37, the maintenance and repair assisting module 113 notifies the maintenance agency of the details of work and the number of working days that are determined and estimated in step S37 and the result of the determination process performed in step S31. After each of the processes of steps S35, S36, and S38, the server 11 ends the processing.

It should be noted that in step S30, in the case where the second communication module 110 receives the diagnosis information and the signal information (YES in step S30), in step S31, the second control module 111 may refer to the second database and determine the state of the apparatus 10 based on the signal information. The second control module 111 may then compare the result of determination with the diagnosis information. In the case where it is determined from the result of this comparison that the result of determination does not coincide with the diagnosis information, the second control module 111 may transmit data in the second database to the apparatus 10. The apparatus 10 may then update the first database on the basis of the data transmitted. In addition, the first database may also be updated regularly or at a specific timing.

Advantages of the state detection system 1 of Embodiment 3 will be described. The determination module 104 of Embodiment 3 determines, on the basis of signal information regarding each of the one or more internal devices, the state of the apparatus 10 corresponds to any one of a plurality of states including the good state, the normal state, the bad state, the minor failure state, and the serious failure state. As a result, the state of the apparatus 10 can be specifically determined. The user acquires the maintenance information including the result of the above determination, and can thus accurately determine whether or not maintenance is necessary. In the case where maintenance is necessary, the user can easily estimate time at which maintenance will become necessary. By requesting maintenance at an appropriate timing, it is possible to minimize the time period for which the apparatus 10 does not perform a desired operation for the user. The maintenance agency acquires the result of the determination by the second control module 111 and the result of the estimation by the maintenance and repair assisting module 113 via the maintenance and repair assisting module 113, and can thus can promptly and easily recognize details of the state of the apparatus 10. Furthermore, the maintenance and repair assisting module 113 determines as work to be done, the details of work and estimates the number of working days on the basis of the specific result of the determination regarding the state of the apparatus 10, whereby maintenance or repair work to be performed by the maintenance agency can be easily optimized.

In the case where the second communication module 110 of Embodiment 3 receives signal information regarding each of the one or more internal devices, the second control module 111 determines which one of the plurality of states the state of the apparatus 10 corresponds to, on the basis of the signal information regarding each of the one or more internal devices, the plurality of states including the good state, the normal state, the bad state, the minor failure state, and the serious failure state. As a result, the state of the apparatus 10 can be specifically determined. The maintenance agency acquires the result of the determination by the second control module 111 and the result of the estimation by the maintenance and repair assisting module 113 via the maintenance and repair assisting module 113, and can thus promptly and easily recognize details of the state of the apparatus 10. Furthermore, the maintenance and repair assisting module 113 determines as work to be done, the details of work and estimates the number of working days on the basis of the specific result of the determination regarding the state of the apparatus 10, whereby maintenance or repair work to be performed by the maintenance agency can be easily optimized.

### Embodiment 4

Regarding Embodiments 1 to 3 as described above, as a process that is performed by the maintenance and repair assisting module 113 to notify the maintenance agency of, for example, the details of work and the number of working days, a notification process using, for example, a screen display is described above as an example. A maintenance and repair assisting module 113 of Embodiment 4 includes a communication interface circuit that can communicate with a terminal device of the maintenance agency and transmits, to the terminal device of the maintenance agency, the determined details of work, the estimated number of working days, and the result of determination by the second control module 111. A state detection system 1 according to Embodiment 4 will be described. It should be noted that components that are the same as or similar to those of any of Embodiments 1 to 3 and have the same functions as or similar functions to those of any of Embodiments 1 to 3 will be denoted by the same reference numerals as those of any of Embodiments 1 to 3. Descriptions concerning components, functions, and operations that are the same as or similar to those of any of Embodiments 1 to 3 will be omitted unless otherwise specified.

It should be noted that in addition to a configuration in which the maintenance and repair assisting module 113 includes the communication interface circuit, the second control module 111 may transmit the result of the determination and the result of the estimation by the maintenance and repair assisting module 113 to the terminal device of the maintenance agency via the second communication module 110.

The flow of processing by the apparatus 10 of Embodiment 4 is similar to that indicated in Fig. 2 or 6, and its description will thus be omitted. The procedure of processing by the server 11 of Embodiment 4 is similar to that indicated in Fig. 3 or 7 except for the following point. Only this point will thus be described.

As a notification process in step S13 or S38, the maintenance and repair assisting module 113 of Embodiment 4 provides information indicating the details of work and the number of working days to the terminal device of the maintenance agency.

Advantages of the state detection system 1 according to Embodiment 4 will be described. The maintenance and repair assisting module 113 of Embodiment 4 transmits information indicating the result of determination by the second control module 111 and information indicating the determined details of work and the estimated number of working days to the terminal device of the maintenance agency in response to a command from the second control module 111. As a result, even when the maintenance agency is not present near the server 11, the maintenance agency can receive information indicating that the apparatus 10 is in the abnormal state and information indicating the details of maintenance or repair work and the number of working days for the apparatus 10. It is therefore possible to increase the efficiency of work of the maintenance agency, and reduce the time period for which the apparatus 10 does not operate. Furthermore, the maintenance agency can provide the above information acquired via the maintenance and repair assisting module 113 to the user, and can propose a repair work or component replacement as needed.

### Embodiment 5

A state detection system 1 according to Embodiment 5 can adjust a signal process load, depending on the computational capability of the apparatus 10. In other words, in the state detection system 1, even in the case where integrated circuits (ICs) having a low computational capability are used in the first control module 103, the determination module 104, the second control module 111, etc., the state of the apparatus 10 can be accurately determined. The state detection system 1 according to Embodiment 5 will be described. It should be noted that components that are the same as or similar to those of any of Embodiments 1 to 4 and have the same functions as or similar functions to those of any of Embodiments 1 to 4 will be denoted by the same reference numerals. Descriptions of components, functions, and operations that are similar to those of any of Embodiments 1 to 4 will be omitted unless otherwise specified.

Fig. 8 is a schematic diagram for explanation of a determination process by the determination module 104 in Embodiment 5. In step S40, the determination module 104 performs a signal process, as needed, on a signal value xₖ obtained from each of the internal devices. It should be noted that the signal value xₖ is, for example, a voltage value Vₖ or a current value Iₖ. The index k is a natural number from 1 to n, and n is a natural number. The signal process is a process including, for example, addition, subtraction, multiplication, division, frequency-characteristic calculation, or gradient calculation for each of the signal values; however, the signal process is not limited to the above process. The frequency-characteristic calculation means a process in which frequency characteristics of a signal are calculated using, for example, a fast Fourier transform (FFT). The gradient calculation means a process to calculate the gradients of the signal values at sampling times. It should be noted that αₖ and yₖ in Fig. 8 are intermediate values in the signal process on the signal value xₖ.

In step S41, the determination module 104 determines whether or not an abnormality occurs in an internal device, by comparing the value Xₖ calculated by the signal process with a threshold determined in advance. In the following, a value calculated by the above signal process is referred to as a calculation value. It should be noted that in the case where the determination module 104 does not perform the process of step S40, in step S41, the determination module 104 may use the signal value xₖ instead of the calculation value Xₖ.

In step S41, the determination module 104 determines whether or not a magnitude relationship between the calculation value Xₖ and the threshold satisfies a specific condition in a first time period determined in advance. It should be noted that the case where the magnitude relationship between the calculation value Xₖ and the threshold satisfies the specific condition means the case where the calculation value Xₖ is smaller than or greater than the threshold. For example, in Fig. 8, the specific condition is satisfied in the case where the calculation value Xₖ does not fall within a normal range P but falls within an abnormal range Q, regarding the internal device. The determination module 104 counts, in the first time period, the number of times it is determined that an abnormality occurs in the internal device, and records the counted number in the determination module 104 or the first storage module 105.

The determination module 104 executes a combination of n processes for determination whether or not the magnitude relationship between the calculation value Xₖ and the threshold satisfies the specific condition in the first time period. For example, the determination module 104 executes n determination processes in the first time period in parallel. It should be noted that in the following, the process for determination whether or not the magnitude relationship between the calculation value Xₖ and the threshold satisfies the specific condition may also be described as an abnormality detection process. In the case where the magnitude relationship between the calculation value Xₖ and the threshold satisfies the specific condition, the determination module 104 determines that an abnormal event occurs in the internal device. Also, a process in which the number of times an abnormal event occurs in the internal device is counted in the first time period may be described as a number-of-abnormalities counting process.

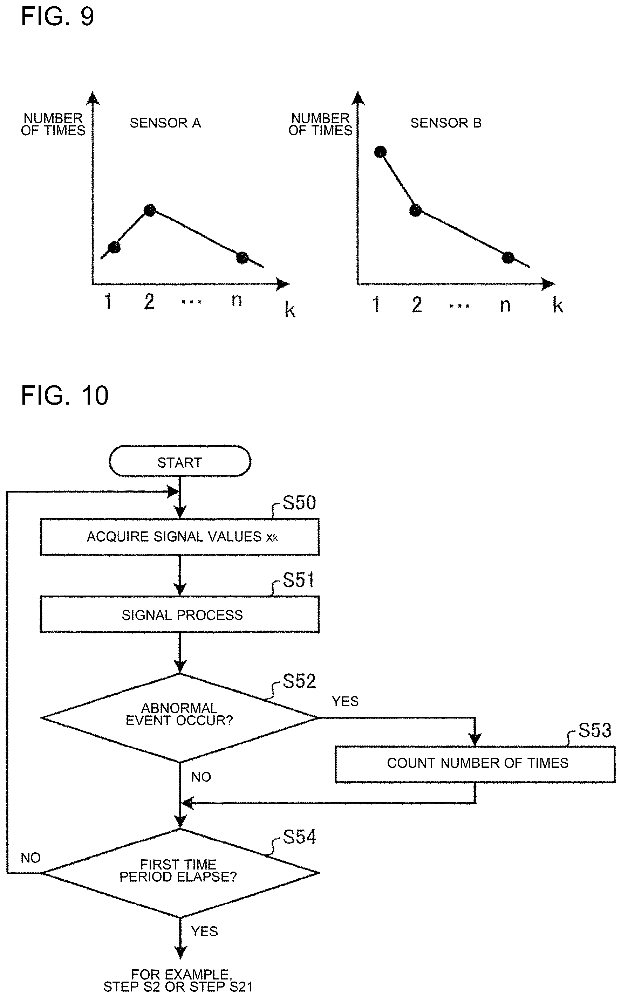

Fig. 9 is a diagram indicating an example of information that is recorded in the case where an abnormal event occurs in the internal device. In the following, the information may also be described as the number-of-abnormalities information. In this case, the number-of-abnormalities counting process is performed n times. To each number-of-abnormalities counting process, an index k is attached. In the graph as indicated in Fig. 9, the horizontal axis represents the index k, and the vertical axis represents the number of times it is determined that an abnormal event occurs in the first time period. For example, regarding the sensor A, the counted number of times it is determined that an abnormal event occurs in the number-of-abnormalities counting process whose index k is 2 is the largest. Regarding the sensor B, as the value of the index k increases, the counted number of times it is determined that an abnormality occurs decreases. In such a manner, it becomes possible to determine whether a failure occurs or not based on the distribution of the number of times an abnormal event occurs on an index k basis in the first time period, the distribution being indicated by the number-of-abnormalities information, and it may also become possible to anticipate a failure from changes in the distribution of the number of times an abnormal event occurs. The determination module 104 determines the state of the apparatus 10 including the one or more internal devices, based on the data exemplified in Fig. 9.

The number-of-abnormalities counting process of Embodiment 5 will be described with reference to Fig. 10. Fig. 10 is a flow chart indicating an example of the number-of-abnormalities counting process by the determination module in Embodiment 5. It should be noted that the determination module 104 of Embodiment 5 performs processing indicated in Fig. 10 instead of the process of step S1 in the processing indicated in Fig. 2. In Embodiment 5, it is assumed that the signal information as indicated in step S2 of Fig. 2 is replaced with number-of-abnormalities information. The determination module 104 of Embodiment 5 may perform the processing as indicated in Fig. 10 instead of the process of step S20 in the processing as indicated in Fig. 6. It should be noted that in Embodiment 5, it is assumed that the signal information in step S21 of Fig. 6 is replaced with number-of-abnormalities information. In step S21, the determination module 104 determines which level the state of the apparatus 10 is at, based on number-of-abnormalities information regarding each internal device.

In step S50 as indicated in Fig. 10, the determination module 104 acquires signal values xₖ from the internal devices. In step 51, the determination module 104 performs the signal process of step S41 that is performed as described with reference to Fig. 8. It should be noted that in the case where the signal process is unnecessary, the process of step S51 may be skipped. In step S52, the determination module 104 determines whether the magnitude relationship between the calculation value Xₖ or the signal value xₖ and the threshold satisfies the specific condition or not. In the case where the magnitude relationship satisfies the specific condition, the determination module 104 determines that an abnormal event occurs in the internal device. In step S52, in the case where the determination module 104 determines that an abnormal event occurs (YES in step S52), in step S53, the determination module 104 counts the number of times the abnormal event occurs. In step S52, in the case where the determination module 104 determines that an abnormal event does not occur (NO in step S52, the determination module 104 causes the processing to proceed to step S54. After step S53, the determination module 104 causes the processing to proceed to step S54.

In step S54, the determination module 104 determines whether or not the first time period elapses from the start of the number-of-abnormalities counting process. In the case where the first time period does not elapse (NO in step S54), the determination module 104 returns the processing to step S50. In the case where the first time period elapses (YES in step S54), the determination module 104 causes the processing to proceed to step S2 as indicated in Fig. 2 or step S21 as indicated in Fig. 6. It should be noted that the processes from step S50 to step S54 are performed n times in parallel. After the processes from step S50 to step S54 are performed n times regarding each of all the internal devices, the determination module 104 performs the process of step S2 or step S21.

As described above, the processes that are performed by the determination module 104 as indicated in Figs. 9 and 10 are described above; however, these processes may be performed by the server 11 after the server 11 receives the signal values from the apparatus 10. In this case, the second control module 111 of the server 11 performs the processing as indicated in Fig. 10 instead of the process of step S10 as indicated in Fig. 3 or the process of step S31. In the above case, the signal information in step S11 or step S31 is the number-of-abnormalities information.

It should be noted that the processes as indicated in Figs. 9 and 10 may be performed by the apparatus 10 and the server 11. In this case, the second control module 111 may compare the result of the determination process in step S11 or S31 that follows step S54 and the diagnosis information from the apparatus 10 with each other. As the result of the above comparison, in the case where it is determined that the result of the determination process does not accord to the diagnosis information, the second control module 111 may transmit data in the second database to the apparatus 10. The apparatus 10 may then update the first database on the basis of the data transmitted. It should be noted that in addition to the above case, the first database may also be updated regularly or at a specific timing.

Advantages of the state detection system 1 according to Embodiment 5 will be described. The determination module 104 of Embodiment 5 counts the number of times the magnitude relationship between the signal value xₖ of each of the one or more internal devices and the threshold or between the calculation value Xₖ obtained by performing the signal process on the signal value and the threshold satisfies a specific relationship in the first time period, and determines the state of the apparatus based on the result of the above counting that corresponds to the number of times. As a result, the signal process load can be adjusted depending on the computational capability of the apparatus 10. Thus, even in the case where an IC in the determination module 104 has a low computational capability, the determination module 104 can determined whether the apparatus 10 is in the abnormal state or not.

### Reference Signs List

1: state detection system, 2: terminal device, 10: apparatus, 11: server, 100: actuator group, 101: sensor group, 102: first communication module, 103: first control module, 104: determination module, 105: first storage module, 110: second communication module, 111: second control module, 112: second storage module, 113: maintenance and repair assisting module

## Claims

1. A state detection system (1) comprising one or more apparatuses (10) and a server (11) for use in maintenance and repair of the one or more apparatuses (10), wherein
each of the one or more apparatuses (10) includes
one or more internal devices that correspond to at least one of an actuator group (100) including one or more actuators and a sensor group (101) including one or more sensors,
a first control module (103) configured to control the one or more internal devices and acquire signal information regarding one of a signal for control of each of the one or more internal devices and a signal from each of the one or more internal devices,
a first storage module (105) configured to store a first database for use in determination of a state of the apparatus (10), the first database being rewritable,
a determination module (104) configured to refer to the first database and determine the state of the apparatus (10) based on the signal information to generate diagnosis information indicating the result of determination by the determination module, and
a first communication module (102) configured to communicate with a terminal device (2) of a user of the apparatus (10) and with the server (11),
the first control module (103) is configured to perform a control to cause the first communication module (102) to transmit maintenance information including a result of determination by the determination module (104) to the terminal device (2) of the user, and perform a control to cause the first communication module (102) to transmit the result of the determination and the signal information to the server (11), and
the server (11) includes
a second communication module (110) configured to receive the diagnosis information and the signal information from the apparatus (10),
a second storage module (112) configured to store a second database for use in determination of the state of the apparatus (10),
a second control module (111) configured to refer to the second database and determine the state of the apparatus (10) using the signal information that is received by the second communication module (110), thereby generating a determination result, wherein the second control module is further configured to compare the determination result and the diagnosis information and when the determination result does not coincide with the diagnosis information, to perform a control to cause the second communication module (110) to transmit data from the second database to the apparatus (10), and
a maintenance and repair assisting module (113) configured to notify, when the second control module (111) determines that the apparatus (10) is in an abnormal state for which maintenance or repair is necessary, a maintenance agency for the apparatus (10) of information based on a result of the determination by the second control module (111),
wherein the determination module (104) is configured to update the first database using the transmitted data from the second database, which is received from the server (11).

2. The state detection system (1) of claim 1, wherein the maintenance and repair assisting module (113) is configured to determine as work to be done, details of work for the maintenance or the repair of the apparatus (10) and estimate the number of working days necessary for the maintenance or the repair, based on the result of the determination by the second control module (111), and notify the maintenance agency of the details of work, the number of working days, and the result of the determination by the second control module (111).

3. The state detection system (1) of claim 2, wherein
the second database includes maintenance-repair past record information indicating a past record of maintenance or repair performed by the maintenance agency, and
the maintenance and repair assisting module (113) is configured to refer to the second database, and determine the details of the work as the work to be done and estimate the number of working days.

4. The state detection system (1) of any one of claims 1-3, wherein the first control module (103) is configured to perform, when the determination module (104) determines that the apparatus (10) is in the abnormal state, a control to cause the first communication module (102) to transmit the maintenance information to the terminal device (2) of the user.

5. The state detection system (1) of any one of claims 1 to 4, wherein
the second storage module (112) is configured to store apparatus information including information indicating at least one of a model type, a manufacture year, an environment condition, and an operation mode of the apparatus (10),
the second control module (111) is configured to perform a control to cause the second communication module (110) to transmit the apparatus information to the apparatus (10), and
the determination module (104) is configured to determine, when receiving the apparatus information from the server (11), the state of the apparatus (10) using the apparatus information.

6. The state detection system (1) of claim 5, wherein the first control module (103) is configured to perform a control to cause the first communication module (102) to transmit the maintenance information including the apparatus information to the terminal device (2) of the user.

7. The state detection system (1) of any one of claims 1 to 6, wherein the determination module (104) is configured to determine, based on the signal information regarding the signal from each of the one or more internal devices, the state of the apparatus (10) as any one of a plurality of states including a good state, a normal state, a bad state, a minor failure state, and a serious failure state.

8. The state detection system (1) of any one of claims 1 to 7, wherein the second control module (111) is configured to determine, when the second communication module (110) receives the signal information regarding each of the one or more internal devices, the state of the apparatus (10) as any one of a plurality of states including a good state, a normal state, a bad state, a minor failure state, and a serious failure state, based on the signal information regarding each of the one or more internal devices.

9. The state detection system (1) of any one of claims 1 to 8, wherein the maintenance and repair assisting module (113) is configured to transmit information based on the result of the determination by the second control module (111) to a terminal device (2) of the maintenance agency in response to a command from the second control

10. The state detection system (1) of any one of claims 1 to 9, wherein the determination module (104) is configured to count the number of times a magnitude relationship between a value of each of the signals from the one or more internal devices or a calculation value obtained by performing signal processing on the value of the signal and a threshold satisfies a specific relationship in a first time period and determines the state of the apparatus (10) using a result of counting that corresponds to the number of times.

## Patentansprüche

1. Zustandsdetektionssystem (1), umfassend eine oder mehrere Vorrichtungen (10) und einen Server (11) zur Verwendung bei der Wartung und Reparatur der einen oder mehreren Vorrichtungen (10), wobei
jede der einen oder mehreren Vorrichtungen (10) Folgendes umfasst:
eine oder mehrere innere Vorrichtungen, die zumindest einem aus einer mehrere Aktuatoren umfassenden Aktuatorgruppe (100) und einer einen oder mehrere Sensoren umfassenden Sensorgruppe (101) entsprechen,
ein erstes Steuermodul (103), das dazu ausgelegt ist, die eine oder mehreren inneren Vorrichtungen zu steuern und Signalinformationen betreffend eines aus einem Signal zum Steuern von jeder der ersten oder der mehreren inneren Vorrichtungen und einem Signal von der einen oder den mehreren inneren Vorrichtungen zu erfassen,
ein erstes Speichermodul (105), das dazu ausgelegt ist, eine erste Datenbank zur Verwendung beim Bestimmen eines Zustands der Vorrichtung (10) zu speichern, wobei die erste Datenbank überschreibbar ist,
ein Bestimmungsmodul (104), das dazu ausgelegt ist, auf die erste Datenbank Bezug zu nehmen und den Zustand der Vorrichtung (10) beruhend auf den Signalinformationen zu bestimmen, um Diagnoseinformationen zu erzeugen, die das Ergebnis der Bestimmung durch das Bestimmungsmodul angeben, und
ein erstes Kommunikationsmodul (102), das dazu ausgelegt ist, mit einem Endgerät (2) eines Benutzers der Vorrichtung (10) und mit dem Server (11) zu kommunizieren,
wobei das erste Steuermodul (103) dazu ausgelegt ist, einen Steuerungsvorgang durchzuführen, um zu bewirken, dass das erste Kommunikationsmodul (102) Wartungsinformationen, welche ein Ergebnis der Bestimmung durch das Bestimmungsmodul (104) umfassen, an das Endgerät (2) des Benutzers überträgt, und einen Steuervorgang durchzuführen, um zu bewirken, dass das erste Kommunikationsmodul (102) das Ergebnis der Bestimmung und die Signalinformationen an den Server (11) überträgt, und
wobei der Server (11) Folgendes umfasst:
ein zweites Kommunikationsmodul (110), das dazu ausgelegt ist, die Diagnoseinformationen und die Signalinformationen von der Vorrichtung (10) zu empfangen,
ein zweites Speichermodul (112), das dazu ausgelegt ist, eine zweite Datenbank zur Verwendung beim Bestimmen des Zustands der Vorrichtung (10) zu speichern,
ein zweites Steuermodul (111), das dazu ausgelegt ist, auf die zweite Datenbank Bezug zu nehmen und den Zustand der Vorrichtung (10) unter Verwendung der durch das zweite Kommunikationsmodul (110) empfangenen Signalinformationen zu bestimmen, wodurch ein Bestimmungsergebnis erzeugt wird, wobei das zweite Steuermodul ferner dazu ausgelegt ist, das Bestimmungsergebnis und die Diagnoseinformationen zu vergleichen und, wenn das Bestimmungsergebnis nicht mit den Diagnoseinformationen übereinstimmt, einen Steuervorgang durchzuführen, um zu bewirken, dass das zweite Kommunikationsmodul (110) Daten von der zweiten Datenbank an die Vorrichtung (10) überträgt, und
ein Wartungs- und Reparaturunterstützungsmodul (113), das dazu ausgelegt ist, wenn das zweite Steuermodul (111) bestimmt, dass die Vorrichtung (10) sich in einem abnormalen Zustand befindet, für den Wartung oder Reparatur erforderlich ist, einer Wartungsagentur für die Vorrichtung (10) Informationen beruhend auf einem Ergebnis der Bestimmung durch das zweite Steuermodul (111) mitzuteilen,
wobei das Bestimmungsmodul (104) dazu ausgelegt ist, die erste Datenbank unter Verwendung der übertragenen Daten aus der zweiten Datenbank, die vom Server (11) empfangen wurden, zu aktualisieren.

2. Zustandsdetektionssystem (1) nach Anspruch 1, wobei das Wartungs- und Reparaturunterstützungsmodul (113) dazu ausgelegt ist, beruhend auf dem Ergebnis der Bestimmung durch das zweite Steuermodul (111) als auszuführende Arbeit Details von Arbeit zur Wartung oder Reparatur der Vorrichtung (10) zu bestimmen und die Anzahl von für die Wartung oder Reparatur erforderlichen Arbeitstage zu schätzen und der Wartungsagentur die Details der Arbeit, die Anzahl an Arbeitstagen und das Ergebnis der Bestimmung durch das zweite Steuermodul (111) mitzuteilen.

3. Zustandsdetektionssystem (1) nach Anspruch 2, wobei
die zweite Datenbank vergangene Wartungs-/Reparatur-Aufzeichnungsinformationen umfasst, die vergangene Aufzeichnungen über durch die Wartungsagentur durchgeführte Wartung oder Reparatur angeben, und wobei
das Wartungs- und Reparaturunterstützungsmodul (113) dazu ausgelegt ist, auf die zweite Datenbank Bezug zu nehmen und die Details der Arbeit als auszuführende Arbeit zu bestimmen und die Anzahl an Arbeitstagen zu schätzen.

4. Zustandsdetektionssystem (1) nach einem der Ansprüche 1 bis 3, wobei das erste Steuermodul (103) dazu ausgelegt ist, wenn das Bestimmungsmodul (104) bestimmt, dass sich die Vorrichtung (10) im abnormalen Zustand befindet, einen Steuervorgang durchzuführen, um zu bewirken, dass das erste Kommunikationsmodul (102) die Wartungsinformationen an das Endgerät (2) des Benutzers überträgt.

5. Zustandsdetektionssystem (1) nach einem der Ansprüche 1 bis 4, wobei
das zweite Speichermodul (112) dazu ausgelegt ist, Vorrichtungsinformationen, umfassend Informationen, die zumindest eines aus einem Modelltyp, einem Herstellungsjahr, einer Umweltbedingung und einem Betriebsmodus der Vorrichtung (10) angeben, zu speichern, wobei
das zweite Steuermodul (111) dazu ausgelegt ist, einen Steuervorgang durchzuführen, um zu bewirken, dass das zweite Kommunikationsmodul (110) die Vorrichtungsinformationen an die Vorrichtung (10) überträgt, und wobei
das Bestimmungsmodul (104) dazu ausgelegt ist, wenn es die Vorrichtungsinformationen vom Server (11) empfängt, den Zustand der Vorrichtung (10) unter Verwendung der Vorrichtungsinformationen zu bestimmen.

6. Zustandsdetektionssystem (1) nach Anspruch 5, wobei das erste Steuermodul (103) dazu ausgelegt ist, einen Steuervorgang durchzuführen, um zu bewirken, dass das erste Kommunikationsmodul (102) die Wartungsinformationen, welche die Vorrichtungsinformationen umfassen, an das Endgerät (2) des Benutzers überträgt.

7. Zustandsdetektionssystem (1) nach einem der Ansprüche 1 bis 6, wobei das Bestimmungsmodul (104) dazu ausgelegt ist, den Zustand der Vorrichtung (10) beruhend auf den Signalinformationen betreffend das Signal von jeder der einen oder mehreren inneren Vorrichtungen als einen aus einer Vielzahl von Zuständen, umfassend einen guten Zustand, einen normalen Zustand, einen schlechten Zustand, einen geringfügigen Ausfallzustand und einen schwerwiegenden Ausfallzustand, zu bestimmen.

8. Zustandsdetektionssystem (1) nach einem der Ansprüche 1 bis 7, wobei das zweite Steuermodul (111) dazu ausgelegt ist, wenn das zweite Kommunikationsmodul (110) die Signalinformationen betreffend jede der einen oder mehreren inneren Vorrichtungen empfängt, den Zustand der Vorrichtung (10) als einen aus einer Vielzahl von Zuständen, umfassend einen guten Zustand, einen normalen Zustand, einen schlechten Zustand, einen geringfügigen Ausfallzustand und einen schwerwiegenden Ausfallzustand, beruhend auf Signalinformationen betreffend jede der einen oder mehreren inneren Vorrichtungen bestimmt.

9. Zustandsdetektionssystem (1) nach einem der Ansprüche 1 bis 8, wobei das Wartungs- und Reparaturunterstützungsmodul (113) dazu ausgelegt ist, als Antwort auf einen Befehl vom zweiten Steuermodul Informationen beruhend auf dem Ergebnis der Bestimmung durch das zweite Steuermodul (111) an ein Endgerät (2) der Wartungsagentur zu übertragen.

10. Zustandsdetektionssystem (1) nach einem der Ansprüche 1 bis 9, wobei das Bestimmungsmodul (104) dazu ausgelegt ist, die Anzahl von Malen zu zählen, die ein Größenverhältnis zwischen einem Wert von jedem der Signale von der einen oder den mehreren inneren Vorrichtungen oder einem Berechnungswert, der durch Durchführen einer Signalverarbeitung am Wert des Signals erhalten wird, und einem Schwellenwert eine spezifische Beziehung in einem ersten Zeitraum erfüllt, und den Zustand der Vorrichtung (10) unter Verwendung eines Zählungsergebnisses, das der Anzahl von Malen entspricht, bestimmt.

## Revendications

1. Système de détection d'état (1) comprenant un ou plusieurs appareils (10) et un serveur (11) à utiliser dans le cadre de la maintenance et la réparation dudit un ou desdits plusieurs appareils (10), dans lequel
chacun dudit un ou desdits plusieurs appareils (10) inclut
un ou plusieurs dispositifs internes qui correspondent à au moins l'un parmi un groupe d'actionneurs (100) incluant un ou plusieurs actionneurs et un groupe de capteurs (101) incluant un ou plusieurs capteurs,
un premier module de commande (103) configuré de manière à commander ledit un ou lesdits plusieurs dispositifs internes et à acquérir des informations de signal concernant l'un parmi un signal de commande de chacun dudit un ou desdits plusieurs dispositifs internes et un signal provenant de chacun dudit un ou desdits plusieurs dispositifs internes,
un premier module de stockage (105) configuré de manière à stocker une première base de données à utiliser dans le cadre de la détermination d'un état de l'appareil (10), la première base de données étant réinscriptible,
un module de détermination (104) configuré de manière à se référer à la première base de données et à déterminer l'état de l'appareil (10) sur la base des informations de signal, afin de générer des informations de diagnostic indiquant le résultat de la détermination par le module de détermination, et
un premier module de communication (102) configuré de manière à communiquer avec un dispositif terminal (2) d'un utilisateur de l'appareil (10) et avec le serveur (11),
le premier module de commande (103) est configuré de manière à mettre en œuvre une commande afin d'amener le premier module de communication (102) à transmettre des informations de maintenance incluant un résultat de détermination par le module de détermination (104) au dispositif terminal (2) de l'utilisateur, et à mettre en œuvre une commande afin d'amener le premier module de communication (102) à transmettre le résultat de la détermination et les informations de signal au serveur (11), et
le serveur (11) inclut
un deuxième module de communication (110) configuré de manière à recevoir les informations de diagnostic et les informations de signal en provenance de l'appareil (10),
un deuxième module de stockage (112) configuré de manière à stocker une deuxième base de données à utiliser dans le cadre de la détermination de l'état de l'appareil (10),
un deuxième module de commande (111) configuré de manière à se référer à la deuxième base de données et à déterminer l'état de l'appareil (10) à l'aide des informations de signal qui sont reçues par le deuxième module de communication (110), ce qui permet de générer par conséquent un résultat de détermination, dans lequel le deuxième module de commande est en outre configuré de manière à comparer le résultat de détermination aux informations de diagnostic et, lorsque le résultat de détermination ne coïncide pas avec les informations de diagnostic, à mettre en œuvre une commande afin d'amener le deuxième module de communication (110) à transmettre des données de la deuxième base de données à l'appareil (10), et
un module d'assistance à la maintenance et à la réparation (113) configuré de manière à notifier, lorsque le deuxième module de commande (111) détermine que l'appareil (10) est dans un état anormal pour lequel une maintenance ou une réparation est nécessaire, à un organisme de maintenance de l'appareil (10), des informations basées sur un résultat de la détermination par le deuxième module de commande (111),
dans lequel le module de détermination (104) est configuré de manière à mettre à jour la première base de données à l'aide des données transmises par la deuxième base de données, lesquelles sont reçues en provenance du serveur (11).

2. Système de détection d'état (1) selon la revendication 1, dans lequel le module d'assistance à la maintenance et à la réparation (113) est configuré de manière à déterminer, en tant que travail à réaliser, des détails de travail pour la maintenance ou la réparation de l'appareil (10), et à estimer le nombre de jours de travail nécessaires pour la maintenance ou la réparation, sur la base du résultat de la détermination par le deuxième module de commande (111), et à notifier, à l'organisme de maintenance, les détails de travail, le nombre de jours de travail et le résultat de la détermination par le deuxième module de commande (111).

3. Système de détection d'état (1) selon la revendication 2, dans lequel
la deuxième base de données inclut des informations de dossier antérieur de maintenance-réparation indiquant un dossier antérieur de maintenance ou de réparation effectuée par l'organisme de maintenance, et
le module d'assistance à la maintenance et à la réparation (113) est configuré de manière à se référer à la deuxième base de données, à déterminer les détails du travail en tant que le travail à réaliser, et à estimer le nombre de jours de travail.

4. Système de détection d'état (1) selon l'une quelconque des revendications 1 à 3, dans lequel le premier module de commande (103) est configuré de manière à mettre en œuvre, lorsque le module de détermination (104) détermine que l'appareil (10) est dans l'état anormal, une commande afin d'amener le premier module de communication (102) à transmettre les informations de maintenance au dispositif terminal (2) de l'utilisateur.

5. Système de détection d'état (1) selon l'une quelconque des revendications 1 à 4, dans lequel
le deuxième module de stockage (112) est configuré de manière à stocker des informations d'appareil, y compris des informations indiquant au moins l'un des éléments parmi un type de modèle, une année de fabrication, une condition d'environnement et un mode de fonctionnement de l'appareil (10),
le deuxième module de commande (111) est configuré de manière à mettre en œuvre une commande afin d'amener le deuxième module de communication (110) à transmettre les informations d'appareil à l'appareil (10), et
le module de détermination (104) est configuré de manière à déterminer, lors de la réception des informations d'appareil en provenance du serveur (11), l'état de l'appareil (10) à l'aide des informations d'appareil.

6. Système de détection d'état (1) selon la revendication 5, dans lequel le premier module de commande (103) est configuré de manière à mettre en œuvre une commande afin d'amener le premier module de communication (102) à transmettre les informations de maintenance, y compris les informations d'appareil, au dispositif terminal (2) de l'utilisateur.

7. Système de détection d'état (1) selon l'une quelconque des revendications 1 à 6, dans lequel le module de détermination (104) est configuré de manière à déterminer, sur la base des informations de signal concernant le signal provenant de chacun dudit un ou desdits plusieurs internes, l'état de l'appareil (10) comme étant l'un quelconque d'une pluralité d'états comprenant un bon état, un état normal, un mauvais état, un état de défaillance mineure, et un état de défaillance grave.

8. Système de détection d'état (1) selon l'une quelconque des revendications 1 à 7, dans lequel le deuxième module de commande (111) est configuré de manière à déterminer, lorsque le deuxième module de communication (110) reçoit les informations de signal concernant chacun dudit un ou desdits plusieurs dispositifs internes, l'état de l'appareil (10) comme étant l'un quelconque d'une pluralité d'états incluant un bon état, un état normal, un mauvais état, un état de défaillance mineure, et un état de défaillance grave, sur la base des informations de signal concernant chacun dudit un ou desdits plusieurs dispositifs internes.

9. Système de détection d'état (1) selon l'une quelconque des revendications 1 à 8, dans lequel le module d'assistance à la maintenance et à la réparation (113) est configuré de manière à transmettre des informations basées sur le résultat de la détermination par le deuxième module de commande (111), à un dispositif terminal (2) de l'organisme de maintenance, en réponse à une commande en provenance du deuxième module de commande.

10. Système de détection d'état (1) selon l'une quelconque des revendications 1 à 9, dans lequel le module de détermination (104) est configuré de manière à compter le nombre de fois où une relation d'amplitude, entre une valeur de chacun des signaux provenant dudit un ou desdits plusieurs dispositifs internes, ou une valeur de calcul obtenue en mettant en œuvre un traitement de signal sur la valeur du signal, et un seuil, satisfait une relation spécifique dans une première période de temps, et détermine l'état de l'appareil (10) à l'aide d'un résultat de comptage qui correspond au nombre de fois.
